(19)

Europäisches
Patentamt
European
Patent Office
Office européen
des brevets

(11)     **EP 1 694 909 B1**

(12)                    **EUROPEAN PATENT SPECIFICATION**

(45) Date of publication and mention
of the grant of the patent:
**27.06.2012   Bulletin 2012/26**

(21) Application number: **04801737.0**

(22) Date of filing: **13.12.2004**

(51) Int Cl.:
***D21C 11/00*** *(2006.01)*          ***D21C 11/04*** *(2006.01)*
***B01D 17/032*** *(2006.01)*

(86) International application number:
**PCT/SE2004/001846**

(87) International publication number:
**WO 2005/059242 (30.06.2005 Gazette 2005/26)**

(54) **METHOD AND PLANT FOR HANDLING A MIXTURE OF LIQUOR AND SOAP, AND A PLANT FOR CONVERSION OF FIBRE MATERIAL TO PULP**

VERFAHREN UND ANLAGE ZUR HANDHABUNG EINER MISCHUNG VON LAUGE UND SEIFE UND ANLAGE ZUR UMWANDLUNG VON FASERMATERIAL IN HALBSTOFF

PROCEDE ET INSTALLATION PERMETTANT DE MANIPULER UN MELANGE DE LESSIVE ET DE SAVON ET INSTALLATION PERMETTANT DE CONVERTIR UN MATERIAU FIBREUX EN PATE

(84) Designated Contracting States:
**AT BE BG CH CY CZ DE DK EE ES FI FR GB GR HU IE IS IT LI LT LU MC NL PL PT RO SE SI SK TR**

(30) Priority: **18.12.2003   SE 0303457**

(43) Date of publication of application:
**30.08.2006   Bulletin 2006/35**

(73) Proprietors:
 • **KS Process Innovation**
   **661 42 Säffle (SE)**
 • **Invent Karlstad AB**
   **652 17 Karlstad (SE)**
 • **J2A System Design**
   **S-653 50 Karlstad (SE)**

(72) Inventor: **STENSSON, Kjell**
**S-661 42 SÄFFLE (SE)**

(74) Representative: **Andréasson, Ivar**
**Hynell Patenttjänst AB**
**Patron Carls väg 2**
**683 40 Hagfors/Uddeholm (SE)**

(56) References cited:
**WO-A1-92/13804     US-A- 3 804 261**
**US-A- 5 308 504     US-B1- 6 409 808**
**US-B1- 6 582 601**

 • **von Matern F.: 'SSVL:s miljövardsprojekt SAPKOMPENDIUM utarbetat av ANGPANNEFORENINGEN', Sapkonferens i Stockholm, 12 september 1972, pages D1-D8 XP002995356**

Printed by Jouve, 75001 PARIS (FR)

## Description

TECHNICAL FIELD

The present invention relates to a method and a plant for handling a mixture of liquor and soap that has been obtained in connection with the digestion of fibre material to form pulp. The invention also relates to a plant for conversion of fibre material into pulp.

BACKGROUND OF THE INVENTION

In the production of paper pulp, fibre material is digested in a digester. Often, the fibre material is softwood and/or hardwood that has been chopped into comminuted chips. It is however also known to use other types of fibre materials. White liquor is used in the digestion. During the digestion process, the white liquor incorporates different substances that originate from the fibre material. The white liquor converted accordingly is then withdrawn from the digester as a waste liquor, or a so called black liquor, which also comprises a certain amount of soap that originates from substances in the fibre material. After dilution by liquid from the pulp wash, the liquor is often referred to as weak liquor. The liquor may then be reconverted to white liquor, and be recycled to the digestion process, by a treatment process that among other things comprises evaporation and treatment in a soda recovery boiler, in a manner that is well known per se. The soap must be separated before the liquor can be converted to white liquor. Heat is supplied at the evaporation of the liquor. If the liquor contains soap at that point, foaming may occur which leads to contaminated condensates, incrusts and other problems. As a result, production must be slowed down or in worst case stopped for high-pressure cleaning, resulting in lowered efficiency and increased costs. The soap separation usually takes place in a tank, especially a mixed black liquor tank, that receives the mixture of liquor and soap from the digester. In this connection, it is also possible to add so called semi-thickened black liquor, which is a liquor of higher concentration that has been subjected to soap separation. A suitable concentration of such semi-thickened black liquor may be 48 % e.g. Semi-thickened black liquor can be added for the purpose of controlling liquor density. Preferably, the liquor density should be kept invariable. By their different densities, the liquor and the soap can be separated from each other. Normally, the soap has a lower density than the liquor and therefore tends to float on top of the liquor. The film-forming that follows enables the soap and the liquor to be separated from each other. Thereafter, the liquor can be brought to an evaporation plant. It occurs that the soap is separated from the liquor by throttling an outflow from the tank, especially by throttling a flow of liquor from the bottom part of the tank. When the flow from the tank is throttled, the tank level rises due to the addition of more liquor and soap. The level rises until the soap flows over the brims of the tank and down into a surrounding tank. Liquor may furthermore be pumped from a bottom part of the tank. In order for such an operation to be performed correctly, it is required that one knows were the boundary line is between soap and liquor, or at least that an area can be determined within which one of these components dominates. The inventor of the present invention is aware of a previous method that was tried in Swedish paper industry, the so called "soap elevator". According to that method, a lead is fed into the mixed black liquor tank via a steel wire that is wound up on a roll. The purpose was that the lead would detect when the liquor was reached, whereby the lead would return back at the same time as the position of the boundary layer was recorded. This method has however not functioned satisfactorily. In practice, the functionality has shown to be near 0 %. One problem of the method was that it was difficult to determine the required weight and shape of the lead for it to correctly detect the boundary layer. The inventor also knows that other methods have been used in Swedish industry. It is for example known to the inventor that attempts have been made to echo-sound the mixture, with the intention that the signal would bounce on the surface of the liquor. However, that method did not give satisfying results as it was shown that the signal could disappear so that no echo was obtained. The functionality was extremely bad. One conceivable explanation could be that the medium is in a varying separation process all the time, in which it constantly changes contents, and therefore it is difficult to adjust the signal. In the ideal case, there is a sharp boundary between the liquor and the soap. This is however not always the case, but the soap and the liquor may instead be partly mixed within a large or small area of the tank, so that no sharp boundary can be seen.

Furthermore, the inventor is aware of attempts at determining the distribution of liquor and soap by sensing the conductivity of the mixture. Parts of the measuring equipment have been inserted into the mixture. Also this method has proven to be unsatisfactory and its functionality was extremely bad. One conceivable explanation for the bad results of this method is that deposits formed on the instruments lowered into the mixture and interfered with the detection.

F. von Matérn has described in a conference paper, (SSVL:s miljövårdsprojekt SÅPKOMPENDIUM, Stockholm September 1972) how it is possible to measure the thickness of the soap layer in a given vat. According to von Matérn, one can make use of the fact that the density of soap is about 20 % lower than that of black liquor and install a pressure sensor in the wall of the vat. The vat is brought to overflowing which can be detected. During the skimmings operation, the thickness of the soap layer can be read from the pressure sensor and, based on experience; the skimmings separation can be discontinued when a certain soap layer thickness has been attained. This method is applicable only on such black liquor vats where the skimmings separation is achieved by overflowing to fixed devices.

In US patent no. 5,308,504, it has been suggested to measure the viscosity at different levels of a tank.

It is an objective of the present invention to provide a simple and reliable method of determining the distribution of soap and liquor in a tank, especially a mixed black liquor tank receiving a mixture of liquor and soap from a digester. It is another objective of the invention to provide a method of determining the distribution of soap and liquor that can be used also when the film-forming is incomplete.

ACCOUNT OF THE INVENTION

The method according to the invention relates to the handling of a mixture of liquor and soap, that is obtained in connection with pulp digestion. In the present application, the term "liquor" refers to a waste liquor from pulp digestion, optionally supplied with liquids from pulp wash and/or a semi-thickened black liquor. Such a waste liquor is sometimes referred to as a weak liquor or a mixed black liquor. The term black liquor may also be used in this context, although it should be understood that that term usually refers to undiluted waste liquor coming directly from the digester and not yet having been diluted by liquid from the pulp wash. The method according to the invention comprises the providing of a tank, especially a mixed black liquor tank, and charging the tank with a mixture of liquor and soap of known densities. In an advantageous form of the invention, mixed black liquor is also supplied in order to control the liquor density. Preferably, mixed black liquor is supplied to keep the liquor density invariable. The method also comprises measuring of the pressure at a given level of the tank, and measuring of the total level of the mixture. According to the method of the invention, the relative portion of at least one of the liquor and the soap is thereafter determined as a function of the measured pressure, the measured level, the density of the soap and the density of the liquor. The relative portion(s) is/are suitably determined by solving the equations $x+y = h$ and $x\rho_x g + y\rho_y g = p$, where h = the vertical distance from the level at which the pressure is measured to the surface of the mixture, p = the measured pressure, x = the height of the liquid column of liquor above the level at which the pressure is measured, y = the height of the liquid column of soap, $\rho_x$ = the liquor density, and $\rho_y$ = the density of the soap. By g is meant the constant of gravity.

According to an advantageous embodiment of the invention, the pressure is measured at the bottom of the tank, but it is also conceivable to measure the pressure at a level above the bottom of the tank.

According to a preferred aspect of the invention, the level is measured by radar, but other methods of measuring the level that are obvious to the skilled man are also conceivable. The measuring of the level takes place by contactless measurement, so that the measuring equipment does not get in contact with the mixture of liquor and soap.

According to an especially advantageous aspect of the invention, the result of the measurements mentioned above is used for continuous monitoring of the real volumes of liquor and soap, from the determined value of the relative portion(s), and thereby to perform a control operation that separates soap from liquor. According to an advantageous aspect of the invention, the control operation comprises throttling a liquor flow from the tank. The control operation may also comprise active removal of soap that has been separated from the liquor. The control operation may of course comprise different combinations of such actions. In principle, it is also conceivable to increase the flow of mixture to the mixed black liquor tank, in order thereby to make the soap brim over.

According to an advantageous aspect of the invention, an evaporation operation is performed on liquor removed from the tank, where after the liquor is subjected to additional treatment steps in order to be converted to white liquor. Thereafter, the white liquor may be used in the digestion of fibre material to form pulp.

The invention also relates to a plant for handling a mixture of liquor and soap. Accordingly, the plant according to the invention comprises a tank, especially a mixed black liquor tank, intended to contain a mixture of liquor and soap, a pressure gauge arranged to indicate the pressure at a certain level of the tank, and a level indicator arranged to indicate the level of a mixture of liquor and soap in the tank. The volume of the tank is at least 200 m$^3$ and preferably at least 400 m$^3$. Most preferably, the volume of the tank is within the range of 600 m$^3$ - 4000 m$^3$. In a realistic embodiment of the invention, the volume of the tank may accordingly be about 2000 m$^3$.

In an advantageous embodiment of the invention, the level indicator and the pressure gauge are connected to control equipment arranged to control at least one of an inflow to the tank and an outflow from the tank, as a function of the indicated level and the indicated pressure. The control equipment may comprise a logic/control unit and means such as valves and pumps, in order to affect inflows to and outflows from the tank. The control equipment may for example be arranged to throttle a liquor flow from a bottom part of the tank, as a function of the indicated level and the indicated pressure. It may also be arranged to control an inflow to the tank of additional mixture of liquor and soap.

In a preferred embodiment of the invention, the level indicator comprises radar.

The invention could also be understood in terms of a plant for conversion of fibre material to paper pulp, which plant comprises a digester and a tank, especially a mixed black liquor tank, connected to the digester so that the tank can receive a mixture of liquor and soap from the digester. Thereby, a pressure gauge is arranged to indicate the pressure at a given level of the tank, and a level indicator is arranged to indicate the level of a mixture of liquor and soap in the tank.

In an advantageous embodiment, said plant for conversion of fibre material also comprises control equipment arranged to control at least one of an inflow to and an outflow from the tank. In an advantageous embodiment, the control equipment is connected both to the level indicator and the pressure gauge. The control equipment may then suitably be arranged at given values of the soap and liquor densities, respectively, to control one of the inflow to the tank from the digester and an outflow from the tank, as a function of the indicated pressure and the indicated level.

The plant for conversion of fibre material to paper pulp may also comprise an evaporation plant arranged to handle liquor separated from the soap.

In a preferred embodiment, the plant also comprises equipment for converting the liquor to white liquor and for recycling the same to the digester.

BRIEF DESCRIPTION OF THE DRAWINGS

Fig. 1 is schematically showing a part of the cycle for chemical substances occurring at pulp digestion.

Fig. 2 is schematically and in cross-section showing a tank intended to receive a mixture of liquor and soap, from a digester.

DETAILED DESCRIPTION OF THE INVENTION

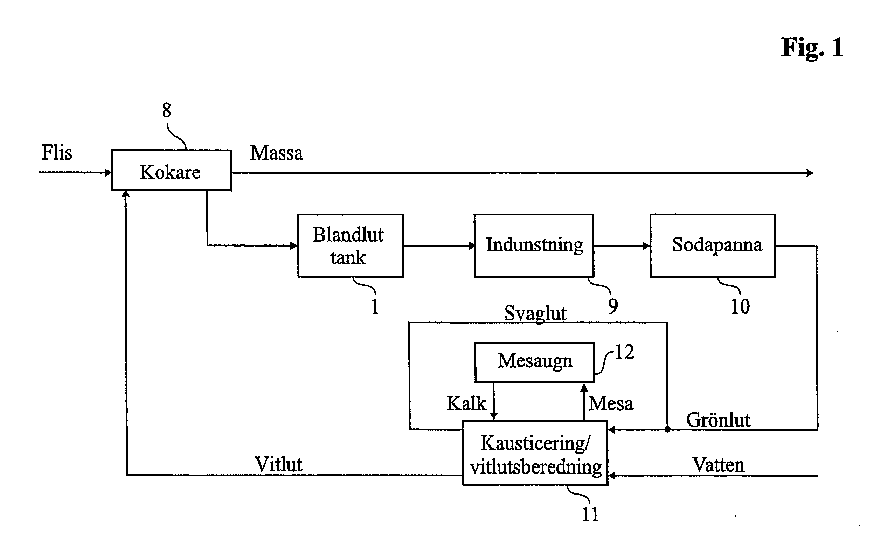

Referring to Fig. 1, a possible cycle for chemical substances occurring at the digestion of pulp, is shown. In connection with the digestion, white liquor and chips or other fibre material is introduced in a digester 8. A mixture of liquor and soap results as a residual product from the digestion and is taken to a tank 1, especially a mixed black liquor tank 1. After the liquor having been separated from the soap, the liquor is subjected to evaporation in an evaporation plant 9, where after the liquor moves on in the form of a thick waste liquor, to a soda recovery boiler 10. The soda recovery boiler 10 can be seen as a reactor constituting the first step in the conversion of the recovered chemicals into new pulping chemicals. Green liquor from the soda recovery boiler is subjected to causticising in a causticising plant 11 that in turn generates white liquor to the digester 8. In this context, a lime sludge reburning kiln 12 may also be used.

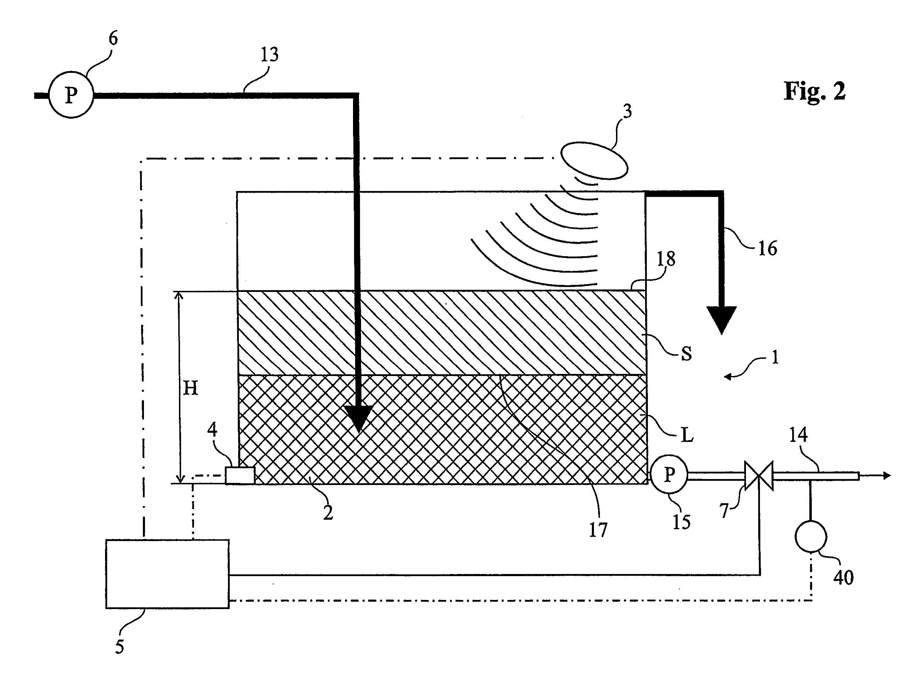

The plant according to the invention will now be explained in greater detail with reference to Fig. 2. Fig. 2 is schematically showing a mixed black liquor tank 1 intended to receive a mixture of liquor and soap, from a digester. Fig. 2 shows how the mixture is supplied from the digester via a schematically shown conduit 13. When the mixture is in the tank 1, it will form layers due to the different densities of the liquor and the soap. Fig. 2 shows that the mixture is divided in liquor L and soap S. The soap S has a lower density than the liquor L and tends to float on top of the liquor L. In the Figure, a distinct boundary 17 is shown between the soap S and the liquor L. It should be realised however that in many cases it is not possible to define a sharp boundary, since the liquor L and the soap S may be partly mixed within an area of the tank 1. The Figure shows that a pump 6 may be connected to conduit 13 in order for a mixture of liquor L and soap S to be supplied to the tank 1. It should however be realised that other means may be used to control the flow from the digester 8 to the tank 1. For example, valves may be conceived. A conduit 14 is connected to the bottom 2 of the tank 1, for discharge of liquor from the bottom part of the tank 1. The liquor draining can be controlled by several different means. In the Figure, it is schematically indicated that a valve 7 has been arranged in conduit 14 in order to control the liquor flow from the tank 1. Optionally, a density meter 40 may be connected to the same conduit. Suitably, the density meter 40 is connected to a logic unit 5 for continuous monitoring of the density. Reference numeral 15 indicates a pump that optionally may be connected to conduit 14, in order to affect the flow. Reference numeral 16 schematically indicates a soap S flow from the tank 1. Optionally, reference numeral 16 may denote an overflow pipe 16 through which the soap can be removed. It is realised that the soap S flow from the tank 1 not necessarily has to take place via a dedicated conduit. Instead, the soap flow 16 from tank 1 may be achieved by allowing the soap S to flow over the brims of tank 1 and down into another tank that surrounds the tank **1** that received the mixture of soap and liquor from the digester 8. The soap S can be brought to flow over the brims of tank 1 by for example throttling a liquor flow L from a bottom part of tank 1, so that the level in tank 1 rises when additional mixture of liquor L and soap S is supplied. Alternatively, the soap S may actively be pumped off by a pump and a dedicated conduit. At or near the bottom 2 of the tank 1, a pressure gauge 4 is arranged. In one conceivable embodiment of the invention, a flexible membrane (not shown) is arranged in the wall of the tank 1. In this embodiment, the pressure gauge 4 is arranged outside the tank itself, but is in contact with the flexible membrane and thereby, it can detect the pressure in the tank 1. Thereby, the advantage is attained that the pressure gauge 4 need not be exposed to the contents of tank 1, which would jeopardize the function of pressure gauge 4. A suitable pressure gauge may be a pressure transmitter from e.g. the American manufacturer Rosemount Inc., 8200 Market Blvd. Chanhassen, MN 55317, USA. Rosemount has made a level indicator that is sold under the name 1151 Pressure Transmitter. Such a transmitter may be suitable as a pressure gauge 4. A level indicator 3 is also arranged in connection with the tank. In an advantageous embodiment of the invention, the level indicator 3 may comprise a radar device 3. A level indicator 3 suitable for this application and operating by radar, is obtainable from Vega Controls Ltd, Victoria Way, Burgess Hill, West Sussex RH15 9NF, United Kingdom. Vega Controls markets a radar level indicator called Vegapuls, which may be a suitable choice for this application. Fig. 2 shows that the level indicator 3 and the pressure gauge 4 are connected to control equipment 5, 7 arranged to control at least one of an inflow to the tank 1 and an outflow from the tank 1, as a function of the indicated level and the indicated pressure. In Fig. 2, reference numeral 5 denotes a logic/control unit, such as a computer, that is connected with the pressure gauge 4 and the level indicator 3. The logic or control unit 5 may also be connected with devices for controlling inflow to and/or outflow from the tank 1. Embodiments are however also conceivable in which the logic unit 5 is not connected to any valves, pumps or other devices in order to control a flow. From a measured value of the pressure and a measured value of the level, the logic unit 5 may determine at least the relative portion of at least one of the liquor L and the soap S. Fig. 2 also shows that the logic unit 5 may be connected with a valve 7 that can be more or less opened or closed, so that a liquor L flow from tank 1 increases or decreases, or is completely shut off. The valve 7 may be controlled by the logic/control unit 5, so that a liquor L flow from tank 1 can be increased or decreased, or completely shut off. It is in principle also conceivable that the logic/control unit 5 may be connected with a pump 6 that pumps the mixture of liquor and soap S to the tank 1, so that the pump may be brought to increase or decrease the flow to the tank 1. It is in principle also conceivable that the logic or control unit 5 is connected with a pump 15 in conduit 14 that leads liquor away from tank 1. In that case, the logic unit 5 and the valve 7 are accordingly parts of control equipment for controlling a flow from tank 1. In principle, the control equipment may comprise means such as pumps or valves that control an inflow to tank 1. In most cases, a suitable volume of the tank is at least 200 m$^3$ and preferably at least 400 m$^3$. Most preferably, the volume of the tank is within the range of 600 m$^3$ - 4000 m$^3$. Embodiments are however conceivable in which the volume of tank 1 exceeds 4000 m$^3$. In a realistic embodiment, the volume of the tank 1 may be about 2000 m$^3$.

The method according to the invention operates in the following way. Tank 1 is charged with a mixture of liquor L and soap S, obtained in connection with pulp digestion. The density of liquor L and soap S is known, for example by being determined in advance or by continuous measuring of the density during operation. The control unit 5 is provided with information about the density of liquor L and soap S. If necessary, the control unit 5 can be continuously updated with measured values of densities of the liquor and/or soap, for example by connecting the control unit 5 to one or more density meters 40. The pressure in the tank 1 is measured at a given level, for example by use of the pressure gauge 4. Also, the total level of the mixture is measured, for example by use of the level indicator 3. Thereafter, the relative portion of at least one of the liquor L and the soap S is determined as a function of the measured pressure, the measured level, the density of the soap S and the density of the liquor L. It should be understood that the relative portions of liquor L and soap S correspond to the height of the liquid column of the respective liquids. Primarily, a volume portion is intended. The volume portion is of course directly related to a weight portion, as the densities for the two liquids are known. Suitably, the relative portions may be determined by inserting the measured values of pressure and level in the following equations:

$$(1)\ x+y = h$$

and

$$(2)\ x\rho_x g + y\rho_y g = p$$

where h = the vertical distance from the level at which the pressure is measured to the surface 18 of the mixture, p = the measured pressure, x = the height of the liquid column of liquor above the level at which the pressure is measured, y = the height of the liquid column of soap, $\rho_x$ = the liquor density, and $\rho_y$ = the density of the soap. By g is meant the acceleration of gravity. Then, the relative portions of soap S and liquor L are obtained by solving the two equations given above. Suitably, the equations given above are programmed in the logic/control unit 5. It should be realised that in practice the equations above need not have a totally stringent formulation. Starting from reference levels calibrated in advance, the logic/control unit 5 may operate with a version in which equation (2) is expressed as "$x\rho_x + y\rho_y = p$". This is possible since the acceleration of gravity g is a constant. Starting out from a reference level for the pressure e.g., determined in advance, the acceleration of gravity may be disregarded.

The pressure is preferably measured at or in close connection with the bottom 2 of the tank 1. It is realised that the vertical distance from the level at which the pressure is measured up to the level of the surface 18 of the mixture is the same as the distance from the bottom 2 of the tank 1 and up to the surface 18 of the mixture. In Fig. 2, this distance is denoted H. It is furthermore realised that what is directly measured by a radar 3 arranged above the tank, is the distance from the radar 3 to the surface of the mixture. As the radar device 3 itself is at a known level, this distance can easily be recalculated to a distance from the bottom 2 of the tank 1 and to the surface of the mixture.

The level indicator 3 is not in contact with the mixture of soap and liquor. In a preferred embodiment of the invention, the level H is measured by radar 3.

Starting out from the value determined for the relative portion(s), a control operation may suitably be undertaken that separates liquor L and/or soap S from the contents of tank 1 and thereby possibly also affects the size of the relative portions of liquor L and soap S in tank 1. Such a control operation may comprise throttling the liquor flow from tank 1. If for example the control unit 5 notes that the total liquid level H is close to the upper brims of tank 1, and that the height of the liquid column of the soap is high, the logic/control unit 5 may signal the valve 7 to decrease or shut off the flow in conduit 14. As additional mixture of liquor and soap is supplied in supply conduit 13, the level in tank 1 rises until it brims over, whereby soap flows over the brims of tank 1. Thereby, the soap S that is separated from liquor L is removed. Optionally, soap that brims over may be lead away via an overflow pipe 16 schematically indicated in Fig. 2. When tank 1 brims over, the lever indicator 3 can be calibrated by measuring the level at the moment that it is noted that the tank brims over. The measured level may serve as a reference, so that other levels may start out from that reference value.

The control operation may also comprise removal of liquor L that has been separated from the soap S. This is may be achieved by the control unit 5 signalling the valve 7 to open from a closed position, or to move from a partly open position to an even more open position, so that a flow of liquor from tank 1 is achieved or increased.

It should be realised that after separation of liquor L from soap S, the thus removed liquor L can be subjected to an evaporation operation, where after the liquor L can be subjected to additional treatment steps in order to be converted to white liquor, which white liquor is then used in digestion of fibre material to form pulp.

It is realised that the invention also could be described in terms of a plant for conversion of fibre material to paper pulp, which plant comprises a digester 8 and a tank 1 connected to the digester 8 so that the tank 1 can receive a mixture of liquor and soap from the digester 8, a pressure gauge 4 arranged to indicate the pressure at a given level of the tank 1, and a level indicator 3 arranged to indicate the level of a mixture of liquor and soap in the tank 1. Then, the tank 1 is suitably designed in accordance with what has been described above in connection with Fig. 2. The plant for conversion of fibre material to pulp may also comprise an evaporation plant 9 arranged to handle liquor L separated from the soap S. The plant for conversion of fibre material may also comprise equipment 10, 11, 12 to convert the liquor to white liquor, and to recycle it to digester 8.

One advantage of the method according to the invention is that the determination of the relative portions of liquor and soap is independent of a distinct film-forming.

In an advantageous embodiment of the method according to the invention, the method is performed in two steps by use of two tanks. The method may then take place according to the following. The liquor separated from a first tank 1, by conduit 14 for removal of liquor, is led to a second tank 1 that, just as the first tank, has a level indicator 3 (preferably radar) and a pressure gauge (e.g. Rosemount) and where these meters are connected with a logic unit 5, optionally the same logic unit 5 that is used by the first tank. Alternatively, the second tank 1 may have a logic unit 5 of its own. By measuring the content of soap and liquor in the second tank, it may be determined how efficient the separation of soap and liquor has been in the first tank. Thereby, the contents of liquor and soap that have been or that are measured in the first tank, may be compared with the contents measured in the second tank 1. Hereby, a measure is given for the efficiency of the separation in the first tank.

Above, the invention has been described in terms of a method, a plant for handling a mixture of liquor and soap, and a plant for converting fibre material to form pulp. It should be realised however that these features can be seen as different aspects of one and the same invention. Accordingly, the plants described may comprise such equipment that is mentioned in connection with the method according to the invention. In the same way, the method according to the invention may comprise such steps that are a natural cause of using the plants according to the invention, independently of if such steps are expressively described or not. The plants according to the invention may be achieved for example by reconstruction/supplement of existing plants. Therefore, the invention can also be understood in terms of a method of rebuilding existing plants, whereby the method comprises such steps/installation measures that are a natural cause of the conversion of an existing plant to a plant according to the invention, as described above.

It should be understood that the determination of the relative portions of liquor L and soap S also may be used for other purposes than the controlling of inflow to and outflow from tank 1. For example, it should be understood that the method and plant described above may be used to calculate/determine the rate at which liquor and soap, respectively, is supplied to the tank. By continuous measurement of the soap content, it is possible to determine how fast is the supply of new soap, i.e. the soap forming rate or "the soap derivative". Thereby, information can be established about the composition of the fibre material, since the soap S essentially originates from extractives in the fibre material. Accordingly, it is possible to determine the portion of soap per digested ton. It is also possible to couple this information to an alarm that sounds at exceptionally high formation of soap, i.e. a rate of formation of the soap that exceeds a predetermined, maximum allowed value. Such use of the method according to the invention can be performed independent of optional control operations for controlling inflow to or outflow from tank 1. By continuous measurements of the liquor content, it is possible at the same time to calculate how fast is the supply of liquor, "the liquor derivative". From that, information may be achieved about the production process.

## Claims

1. A method for determining the relative portions of liquor (L) and soap (S) in a mixture of liquor (L) and soap (S), that is obtained in connection with pulp digestion, and which method comprises the following steps: providing a tank (1), charging the tank (1) with a mixture of liquor (L) and soap (S) of known densities, measuring the pressure at a given level of the tank (1), measuring the total level of the mixture, and determining the relative portion of at least one of the liquor (L) and the soap (S), as a function of the measured pressure, the measured level, the density of the soap (S) and the density of the liquor, *characterized in that* the measuring of the level in the tank (1) takes place by contactless measurement, so that the measuring equipment does not get in contact with the mixture of liquor (L) and soap (S).

2. A method according to claim 1, **characterised in that** the pressure is measured at the bottom (2) of tank (1).

3. A method according to claim 1 or 2, **characterised in that** the level is measured by radar (3).

4. A method according to claim 1, **characterised in that** starting out from the determined value (s) of the relative portion (s), a control operation is performed that separates liquor (L) and/or soap (S) from the contents of the tank (1).

5. A method according to claim 4, **characterised in that** the control operation comprises throttling an outflow from the tank (1).

6. A method according to claim 4, **characterised in that** the control operation comprises removal of liquor (L) that has been separated from the soap (S).

7. A method according to claim 4, **characterised in that** the control operation comprises removal of soap (S) that has been separated from the liquor (L).

8. A method according to claim 6, **characterised in that** the liquor (L) removed accordingly is subjected to an evaporation operation, where after the liquor (L) is subjected to additional treatment steps in order to be converted to white liquor (W), which white liquor is then used in digestion of fibre material to form pulp.

9. A method according to claim 1, **characterised in that** the relative portion (s) is/are determined by solving the equations $x+y = h$ and $x p_x g + y p_y g = p$, where $h$ = the vertical distance from the level at which the pressure is measured to the surface of the mixture, $p$ = the measured pressure, $x$ = the height of the liquid column of liquor above the level at which the pressure is measured, $y$ = the height of the liquid column of soap, $p_x$ = the liquor density, and $p_y$ = the density of the soap.

10. A plant for conversion of fibre material to paper pulp, which plant comprises a digester (8), a tank (1) connected to the digester (8) so that the tank (1) can receive a mixture of liquor and soap from the digester (8), a pressure gauge (4) arranged to indicate the pressure at a given level of the tank (1), and a level indicator (3) arranged to indicate the level of a mixture of liquor and soap in the tank (1), *characterized in that* the level indicator (3) is arranged above the tank (1) for contactless measurement of the level of the mixture in the tank (1).

11. A plant according to claim 10, **characterised in that** it further comprises control equipment (5,7) arranged to control at least one of an inflow to the tank, from the digester (8), and an outflow from the tank (1).

12. A plant according to claim 11, **characterised in that** the control equipment (5, 7) is connected both to the level indicator (3) and the pressure gauge (4), and **in that** the control equipment (5,7) is arranged, at a given value of the soap and liquor densities, to control at least one of an inflow to the tank (1), from the digester (8), and an outflow from the tank (1), as a function of the indicated pressure and the indicated level.

13. A plant according to any one of claims 10-12, **characterised in that** the plant also comprises an evaporation plant (9) arranged to handle liquor separated from the soap.

14. A plant according to claim 13, **characterised in that** it also comprises equipment (10, 11, 12) for conversion of the liquor to white liquor, and for recycling the same to the digester.

## Patentansprüche

1. Verfahren zum Bestimmen der relativen Anteile von Lauge (L) und Seife (S) in einer Mischung von Lauge (L) und Seife (S), die in Verbindung mit dem Aufschluss von Pulpe erhalten wird, und wobei das Verfahren die folgenden Schritte umfasst:

   Bereitstellen eines Tanks (1),
   Befüllen des Tanks (1) mit einer Mischung von Lauge (L) und Seife (S) mit bekannten Dichten,
   Messen des Drucks bei einem bestimmten Füllstand des Tanks (1),
   Messen des Gesamtfüllstandes der Mischung, und
   Bestimmen der relativen Anteile des mindestens der Lauge (L) oder der Seife (S) als eine Funktion des gemessenen Drucks, des gemessenen Füllstands, der Dichte der Seife (S) und der Dichte der Lauge,

**dadurch gekennzeichnet, dass**
das Messen des Füllstands in dem Tank (1) durch eine kontaktlose Messung durchgeführt wird, so dass die Messausrüstung nicht mit der Mischung von Lauge (L) und Seife (S) in Kontakt tritt.

2. Verfahren nach Anspruch 1, **dadurch gekennzeichnet, dass** der Druck am Boden (2) des Tanks (1) gemessen wird.

3. Verfahren nach Anspruch 1 oder 2, **dadurch gekennzeichnet, dass** der Füllstand durch Radar (3) gemessen wird.

4. Verfahren nach Anspruch 1, **dadurch gekennzeichnet, dass** ausgehend von dem bestimmten Wert des relativen Anteils / den bestimmten Werten der relativen Anteile ein Steuervorgang ausgeführt wird, der Lauge (L) und/oder Seife (S) von den Inhalten des Tanks (1) trennt.

5. Verfahren nach Anspruch 4, **dadurch gekennzeichnet, dass** der Steuervorgang ein Drosseln eines Abflusses aus dem Tank (1) umfasst.

6. Verfahren nach Anspruch 4, **dadurch gekennzeichnet, dass** der Steuervorgang ein Entfernen von Lauge (L) umfasst, die von der Seife (S) getrennt wurde.

7. Verfahren nach Anspruch 4, **dadurch gekennzeichnet, dass** der Steuervorgang ein Entfernen von Seife (S) umfasst, die von der Lauge (L) getrennt wurde.

8. Verfahren nach Anspruch 6, **dadurch gekennzeichnet, dass** die Lauge (L), die entsprechend entfernt wurde, einem Eindampfvorgang unterzogen wird, wonach die Lauge (L) zusätzlichen Behandlungsschritten unterworfen wird, um in Weißlauge (W) umgewandelt zu werden, wobei die Weißlauge dann beim Aufschluss von Fasermaterial verwendet wird, um Pulpe zu bilden.

9. Verfahren nach Anspruch 1, **dadurch gekennzeichnet, dass** der relative Anteil bestimmt wird / die relativen Anteile bestimmt werden durch Lösen der Gleichungen
$x+y=h$ und
$xp_xg+yp_yg=p$,
wobei h gleich dem vertikalen Abstand von der Füllhöhe, bei der der Druck gemessen wird, bis zu der Oberfläche der Mischung ist,

p gleich dem gemessene Druck ist,
x gleich der Höhe der Flüssigkeitssäule von Lauge über der Füllhöhe ist, bei der der Druck gemessen wird,
y gleich der Höhe der Flüssigkeitssäule von Seife ist,
px gleich der Dichte der Lauge ist, und
py gleich der Dichte der Seife ist.

10. Anlage zur Umwandlung von Fasermaterial in Papier-Pulpe, wobei die Anlage
einen Kocher (8),
einen Tank (1), der mit dem Kocher (8) verbunden ist, so dass der Tank (1) eine Mischung von Lauge und Seife von dem Kocher (8) erhalten kann,
ein Druckmessgerät (4), das eingerichtet ist, um den Druck bei einem bestimmten Füllstand des Tanks (1) anzugeben, und
eine Füllstandsanzeige (3), die eingerichtet ist, den Füllstand einer Mischung von Lauge und Seife in dem Tank (1) angeben,
**dadurch gekennzeichnet, dass**
die Füllstandsanzeige (3) über dem Tank (1) angeordnet ist, um den Füllstand der Mischung in dem Tank (1) kontaktlos zu messen.

11. Anlage gemäß Anspruch 10, **dadurch gekennzeichnet, dass** sie weiter eine Steuerungsausrüstung (5, 7) umfasst, um mindestens einen Zulauf von dem Kocher (8) zu dem Tank oder einen Ablauf von dem Tank (1) zu steuern.

12. Anlage gemäß Anspruch 11, **dadurch gekennzeichnet, dass** die Steuerungsausrüstung (5, 7) sowohl mit der Füllstandsanzeige (3) als auch mit dem Druckmessgerät (4) verbunden ist, und dass die Steuerungsausrüstung (5, 7) eingerichtet ist, bei einem bestimmten Wert der Dichten der Seife und der Lauge mindestens den Zulauf von dem Kocher (8) zu dem Tank (1) oder einen Ablauf von dem Tank (1) als eine Funktion des angegebenen Drucks und des angegebnen Füllstands zu steuern.

13. Anlage gemäß einem der Ansprüche 10-12, **dadurch gekennzeichnet, dass** die Anlage ebenfalls eine Eindampfanlage (9) umfasst, die eingerichtet ist, Lauge zu verarbeiten, die von der Seife getrennt wurde.

14. Anlage gemäß Anspruch 13, **dadurch gekennzeichnet, dass** sie ebenfalls eine Ausrüstung (10, 11, 12) umfasst, um die Lauge in Weißlauge umzuwandeln und um sie an den Kocher zurückzuführen.

**Revendications**

1. Un procédé pour déterminer les portions relatives de lessive (L) et de savon (S) dans un mélange de lessive (L) et de savon (S), qui est obtenu dans le cadre d'une décomposition de pâte, le procédé comprenant les étapes suivantes : l'utilisation d'un réservoir (1), le remplissage du réservoir (1) avec un mélange de lessive (L) et de savon (S) selon des densités connues, la mesure de la pression à un niveau donné du réservoir (1), la mesure du niveau total du mélange, et la détermination de la part relative d'au moins un parmi la lessive (L) et le savon (S), en fonction de la pression mesurée, du niveau mesuré, de la densité du savon (S) et de la densité de la lessive, **caractérisé en ce que** la mesure du niveau dans le réservoir (1) est effectuée par mesure sans contact, de sorte que l'équipement de mesure n'entre pas en contact avec le mélange de lessive (L) et de savon (S).

2. Un procédé selon la revendication 1, **caractérisé en ce que** la pression est mesurée au niveau du fond (2) du réservoir (1).

3. Un procédé selon la revendication 1 ou 2, **caractérisé en ce que** le niveau est mesurée par un radar (3).

4. Un procédé selon la revendication 1, **caractérisé en ce qu'**en partant de la valeur déterminée(s) de la part(s) relative(s), une opération de commande est effectuée, qui sépare la lessive (L) et / ou le savon (S) du contenu du réservoir (1).

5. Un procédé selon la revendication 4, **caractérisé en ce que** l'opération de commande comprend le contrôle de débit d'un écoulement provenant du réservoir (1).

6. Un procédé selon la revendication 4, **caractérisé en ce que** l'opération de commande comprend le retrait de la lessive (L) qui a été séparée du savon (S).

7. Un procédé selon la revendication 4, **caractérisé en ce que** l'opération de commande comprend le retrait du savon (S) qui a été séparé de la lessive (L).

8. Un procédé selon la revendication 6, **caractérisé en ce que** la lessive (L) éliminée de cette façon est soumise à une opération d'évaporation, dans laquelle la lessive (L) est soumise à des étapes de traitement supplémentaires afin d'être convertie en lessive blanche (W), laquelle lessive blanche est ensuite utilisée dans la décomposition de matériau fibreux pour former une pâte.

9. Un procédé selon la revendication 1, **caractérisé en ce que** la(les) partie(s) relative(s) est(sont) déterminées en résolvant les équations $x + y = h$ et $xp_x g + yp_y g = p$, où $h$ = la distance verticale depuis le niveau auquel la pression est mesurée jusqu'à la surface du mélange, $p$ = la pression mesurée, $x$ = la hauteur de la colonne de liquide de lessive au-dessus du niveau auquel la pression est mesurée, $y$ = la hauteur de la colonne de liquide de savon, $p_x$ = la densité de la lessive, et $p_y$ = la densité du savon.

10. Une installation pour la conversion de matière fibreuse en pâte à papier, laquelle installation comprend un lessiveur (8), un réservoir (1) relié au lessiveur (8) de sorte que le réservoir (1) puisse recevoir un mélange de lessive et de savon depuis le lessiveur (8), un manomètre (4) agencé pour indiquer la pression à un niveau donné du réservoir (1), et un indicateur de niveau (3) agencé pour indiquer le niveau d'un mélange de lessive et de savon dans le réservoir (1), **caractérisée en ce que** l'indicateur de niveau (3) est agencé au-dessus du réservoir (1) pour une mesure sans contact du niveau de mélange dans le réservoir (1).

11. Une installation selon la revendication 10, **caractérisée en ce qu'**elle comprend en outre un équipement de commande (5, 7) agencé pour commander au moins un parmi un flux entrant dans le réservoir, provenant du lessiveur (8), et un flux sortant du réservoir (1).

12. Une installation selon la revendication 11, **caractérisée en ce que** le dispositif de commande (5, 7) est relié à la fois à l'indicateur de niveau (3) et au manomètre (4), et **en ce que** l'équipement de commande (5, 7) est agencé, à une valeur donnée de densité de savon et de lessive, pour commander au moins un parmi un flux entrant dans le réservoir (1), provenant du lessiveur (8), et un flux sortant du réservoir (1), en fonction de la pression indiquée et du niveau indiqué.

13. Une installation selon l'une quelconque des revendications 10 à 12, **caractérisée en ce que** l'installation comprend également une installation d'évaporation (9) agencée pour traiter la lessive séparée du savon.

14. Une installation selon la revendication 13, **caractérisée en ce qu'**elle comprend également un équipement (10, 11, 12) pour la conversion de la lessive en lessive blanche, et pour le recyclage de celle-ci vers le lessiveur.

Fig. 1

EP 1 694 909 B1

8

Flis → Kokare → Massa

Blandlut tank

Indunstning

Sodapanna

1

Svaglut

9

10

Mesaugn 12

Kalk    Mesa    Grönlut

Vitlut    Kausticering/ vitlutsberedning    Vatten

11

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5308504 A

**Non-patent literature cited in the description**

- *SSVL:s miljövårdsprojekt SÅPKOMPENDIUM,* September 1972